# EUROPÄISCHE PATENTSCHRIFT

(11) **EP 2 689 156 B1**
(45) Veröffentlichungstag und Bekanntmachung des Hinweises auf die Patenterteilung: **06.09.2017**
(21) Anmeldenummer: 12705064.9
(22) Anmeldetag: 16.02.2012
(51) Int. Cl.: F16D 1/068

(54) **WELLE-NABE-VERBINDUNG UND VERFAHREN ZUM HERSTELLEN EINER WELLE-NABE-VERBINDUNG**
SHAFT-HUB CONNECTION AND METHOD FOR ESTABLISHING A SHAFT-HUB CONNECTION
ASSEMBLAGE ARBRE-MOYEU ET PROCÉDÉ DE RÉALISATION D'UN ASSEMBLAGE ARBRE-MOYEU

(30) Priorität: 25.03.2011 DE 102011015208
(43) Veröffentlichungstag der Anmeldung: 29.01.2014
(73) Patentinhaber: Sew-Eurodrive GmbH & Co. KG, 76646 Bruchsal (DE)
(72) Erfinder: ÖZCAN, Abdulvahap, 68753 Waghäusel (DE)
(86) Internationale Anmeldenummer: PCT/EP2012/000684
(87) Internationale Veröffentlichungsnummer: WO 2012/130358

(56) Entgegenhaltungen:
- WO-A1-2010/097609
- DE-A1- 2 151 874
- DE-A1- 3 519 679
- DE-A1- 10 153 653
- DE-A1- 19 609 808
- DE-A1- 19 942 029
- DE-A1-102004 031 852
- FR-A1- 2 786 956
- GB-A- 1 120 029

## Beschreibung

Die Erfindung betrifft eine Welle-Nabe-Verbindung und ein Verfahren zum Herstellen einer Welle-Nabe-Verbindung.

Es ist bekannt, Welle-Naben-Verbindungen kraftschlüssig und/oder formschlüssig zu gestalten.

Aus der DE 10 2004 031 852 A1 ist eine Vorrichtung zur Übertragung eines Drehmoments bekannt.

Aus der DE 35 19 679 A1 ist ein Verfahren zum Herstellen lösbarer Verbindungen durch Formelemente aus Klebstoff bekannt.

Aus der FR 2 786 956 A1 ist eine schnell drehende, elektrische Maschine bekannt.

Aus der DE 101 53 653 A1 sind durch Fressen fest verbundene Konstruktionselemente bekannt.

Aus der WO 2010/097609 A1 ist eine Lageraufnahme bekannt.

Aus der GB 1 120 029 A ist eine Sicherung zum Zusammenhalten von Komponenten bekannt.

Aus der DE 21 51 874 A1 ist als nächstliegender Stand der Technik ein mit einer eingeklebten Fertigwelle versehenes Bauelement, insbesondere Blechpaket einer elektrischen Maschine, bekannt.

Aus der DE 199 42 029 A1 ist ein Permanentmagnetrotor für einen bürstenlosen Elektromotor bekannt.

Aus der DE 196 09 808 A1 ist ein Verfahren zur Herstellung von Klebeverbindungen bei Metallrohren bekannt.

Der Erfindung liegt daher die Aufgabe zugrunde, Fügekräfte beim Herstellen einer Welle-Nabe-Verbindung zu verringern oder zu verhindern.

Erfindungsgemäß wird die Aufgabe bei der Verbindung nach den in Anspruch 1 und bei dem Verfahren nach den in Anspruch 3 oder 4 angegebenen Merkmalen gelöst.

Wichtige Merkmale der Erfindung bei der Welle-Nabe-Verbindung sind, dass eine Welle mit einem Wellenabschnitt in einer Ausnehmung eines Aufnahmeteils, insbesondere Nabe, aufgenommen ist,
wobei der Wellenabschnitt eine zylindrische Oberfläche aufweist,
wobei die Ausnehmung im Wesentlichen zylindrisch geformt ist,
wobei in der Nabe axial sich erstreckende Nuten angeordnet sind, welche in Umfangsrichtung voneinander regelmäßig beabstandet sind,
wobei zwischen der Nabe und dem Wellenabschnitt Klebstoff angeordnet ist.

Von Vorteil ist dabei, dass die Klebeverbindung für axial sich lang erstreckende Verbindungsbereiche verwendbar ist. Denn mittels der als Klebstoffreservoir wirkenden Nutbereiche der Nabe ist gleichmäßige Verteilung von Klebstoff ermöglicht, wobei das Abreißen des Klebefilms verhindert wird und axial weit ausgedehnte Bereiche verklebbar sind. Bei Anwendung einer Spielpassung zwischen Welle und Nabe ist eine axiale Länge realisierbar die 2*R oder gar 4*R übersteigt, wobei R der Radius der Aufnahmeausnehmung der Nabe ist. Vorteilig ist bei der Klebeverbindung auch, dass die Welle und Nabe nur mit geringen oder keinen Fügekräften belastet werden. Somit sind Deformationen von Welle und Nabe vermeidbar. Die aus Welle 2 mit aufgesetzter Nabe, also Blechpaket, verbundene Roh-Motorwelle ist vor dem Fügen fertig bearbeitbar, also fertig bearbeitet durch Schleifen oder dergleichen. Außerdem sind Bohrungen zur Verbindung mit einem Winkelsensor oder dergleichen einbringbar in die Motorwelle. Schon vor dem Aufschieben der Nabe auf die Welle 2 sind auf der Nabe die Dauermagnete aufklebbar. Denn die Nabe ist beim Fügen keinen für die Dauermagnete gefährlichen Kräften ausgesetzt. Vorteiligerweise sind also die Fügekräfte bei der erfindungsgemäßen Welle-Nabe-Verbindung verminderbar und eine Nachbearbeitung wegen beim Fügen entstandener Deformationen entfällt.

Bei einer vorteilhaften Ausgestaltung ist der Wellenabschnitt zylindrisch und die Ausnehmung ebenfalls zylindrisch. Von Vorteil ist dabei, dass ein Verdrehen der Welle gegen die Nabe ermöglicht ist.

Bei einer vorteilhaften Ausgestaltung ist das Aufnahmeteil, insbesondere eine als schon vor dem Fügen mit Magneten an seiner äußeren Oberfläche bestücktes Blechpaket ausgeführte Nabe, als Stapel von Einzelblechteilen ausgeführt, wobei jedes Einzelblechteil eine mittig angeordnete zylindrische Ausnehmung aufweist,
wobei in Umfangsrichtung gleichmäßig voneinander beabstandete Nuten, insbesondere zwei oder mehr Nuten, angeordnet sind, insbesondere wobei die Nuten die Ausnehmung vergrößern. Von Vorteil ist dabei, dass die Nuten dadurch herstellbar sind, dass jedes Einzelblechteil als Stanzteil hergestellt wird, also ausgestanzt wird aus einem Blech. Somit wird dort eine derartige Kontur ausgenommen, die den Querschnitt der Ausnehmung zur Aufnahme der Welle umfasst und zusätzlich noch den Querschnitt der am äußeren Umfang der Ausnehmung den jeweiligen Nutquerschnitt als zusätzlich ausgenommenen Bereich. Die Ausnehmung der Nabe, welche als Stapel aus den Einzelblechen gefertigt ist, setzt sich aus den Ausnehmungen der Einzelblechteile zusammen. Da diese deckungsgleich in axialer Richtung hintereinander stapelbar sind, sind auch die Nuten zusammengesetzt aus den einzelnen ausgenommenen Bereichen. Beim Stapeln der Einzelbleche ist alternativ zu jedem benachbarten Einzelblech ein kleiner Verdrehwinkel vorsehbar, so dass die zusammengesetzt Nut der Nabe einen Schrägungswinkel aufweist, also schraubenabschnittsförmig beziehungsweise spiralabschnittsförmig verläuft. Die kreisförmige Ausnehmungen im Einzelblech bilden die zylindrische Ausnehmung in der Nabe. Bei Vorsehen eines Schrägungswinkels muss dann auch beim Fügen ein Schrägungswinkel ausgeführt werden, also eine Schraubbewegung beim Fügen.

Bei einer vorteilhaften Ausgestaltung ist zwischen Aufnahmeteil und Welle Klebstoff angeordnet, insbesondere wobei der Klebstoff sich auch in in radialer Richtung erstreckende Mikroräume zwischen den Einzelblechen erstreckt. Von Vorteil ist dabei, dass eine verbesserte Verbindung erreicht ist.

Bei einer vorteilhaften Ausgestaltung sind am äußeren Umfang des Aufnahmeteils Dauermagnete stoffschlüssig verbunden, insbesondere klebeverbunden mit dem Aufnahmeteil. Von Vorteil ist dabei, dass aus der Welle mit verbundener Nabe, also Blechpaket mit aufgeklebten Dauermagneten ein Rotor eines Synchronmotors herstellbar ist.

Bei einer vorteilhaften Ausgestaltung sind die Einzelbleche derart in axialer Richtung hintereinander gestapelt angeordnet, dass die aus den Nuten der Einzelbleche gebildeten Nuten im Aufnahmeteil jeweils nur in axialer Richtung verlaufen. Von Vorteil ist dabei, dass eine einfache Herstellung ermöglicht.

Bei einer alternativen vorteilhaften Ausgestaltung sind die Einzelbleche derart in axialer Richtung hintereinander gestapelt angeordnet, dass die aus den Nuten der Einzelbleche gebildeten Nuten im Aufnahmeteil jeweils in axialer Richtung mit einem Schrägungswinkel sich erstrecken. Entsprechend sind dann die aus den gleichartig ausgeführten Einzelblechen gebildeten Außenflächen mit Dauermagneten bestückt. Von Vorteil ist dabei, dass das Polrasten und/oder Nutrasten bei dem mit dem aus Welle und Nabe gebildeten Rotor hergestellten Synchronmotor verringerbar ist.

Wichtige Merkmale bei dem Verfahren zum Herstellen einer Welle-Nabe-Verbindung sind, dass ein Aufnahmeteil, insbesondere Nabe, eine mittig angeordnete Ausnehmung, insbesondere zylindrische Ausnehmung, zur Aufnahme einer Welle vorgesehen ist,
wobei das Aufnahmeteil zumindest eine sich in axialer Richtung erstreckende Nut, insbesondere zwei oder mehr in Umfangsrichtung voneinander gleichmäßig beabstandete Nuten, an seiner die Ausnehmung begrenzenden Innenwand aufweist,
wobei in einem ersten Schritt Klebstoff auf die Welle aufgebracht wird, wobei zumindest eine in axialer Richtung verlaufende Klebstoffspur gebildet wird,
wobei in einem zweiten Schritt die Welle in das Aufnahmeteil eingeführt wird, wobei die relative Winkellage zwischen Welle und Nabe derart gewählt ist, dass eine jeweilige Nut über die Klebstoffspur geschoben wird,
wobei in einem dritten Schritt die Welle relativ zur Nabe gedreht wird. Von Vorteil ist dabei, dass die Nutöffnung über die Klebstoffspur geschoben wird und somit währen des Fügens ständig mit Klebstoff versorgt und befüllt wird. Somit ist die Nut als Klebstoffaufnahmereservoir jeweils gleichmäßig befüllbar und durch die Drehbewegung eine gleichmäßige Befüllung des Klebespalts aus dem Klebstoffreservoir heraus erreichbar. Auf diese Weise ist die Verbindung auch für große axiale Längen einsetzbar.

Wichtige Merkmale bei einem alternativen Verfahren zum Herstellen einer Welle-Nabe-Verbindung sind, dass ein Aufnahmeteil, insbesondere Nabe, eine mittig angeordnete Ausnehmung, insbesondere zylindrische Ausnehmung, zur Aufnahme einer Welle vorgesehen ist,
wobei das Aufnahmeteil zumindest eine sich in axialer Richtung erstreckende Nut, insbesondere zwei oder mehr in Umfangsrichtung voneinander gleichmäßig beabstandete Nuten, an seiner die Ausnehmung begrenzenden Innenwand aufweist,
wobei in einem ersten Schritt ein Mittel zur Klebstoffzuführung derart relativ zur Nabe angeordnet wird, dass Klebstoff in eine beziehungsweise mehrere Nutöffnungen einpressbar ist,
wobei in einem zweiten Schritt die Welle in das Aufnahmeteil eingeführt wird, wobei gleichzeitig Klebstoff in die Nutöffnung beziehungswiese Nutöffnungen eingespritzt wird,
wobei in einem dritten Schritt die Welle relativ zur Nabe gedreht wird. Von Vorteil ist dabei, dass mit einem Röhrchen als Mittel der Klebstoff direkt an die Nutöffnung herangeführt wird und somit während des Fügens ein gleichmäßiges Befüllen mit Klebstoff erreichbar ist. Auf diese Weise ist ein Abreißen des Klebefilms verhinderbar.

Alternativ oder zusätzlich wird Klebstoff auch vorher auf die Welle aufgebracht. Die Motorwelle mit den Klebstoffraupen wird in die Nabe so eingesetzt, also eingefügt, dass die Klebstoffraupen in die Nuten gelangen. Anschließend erfolgt die Verdrehbewegung.

Bei einer vorteilhaften Ausgestaltung wird vor dem zweiten Schritt an der die Ausnehmung in der Nabe begrenzenden Innenwand Klebstoff aufgebracht. Es wird also Klebstoff an die Innenwandung des Blechpakets aufgebracht. Von Vorteil ist dabei, dass eine noch weitere verbesserte Verteilung des Klebstoffs erreichbar ist und somit noch größere axiale Längen mit Klebeverbindung herstellbar sind.

Bei einer vorteilhaften Ausgestaltung wird beim dritten Schritt ein Verdrehwinkel von 360° / N ausgeführt, wobei N die Anzahl der Nuten am Umfang der Nabe ist. Von Vorteil ist dabei, dass mittels der Verdrehung der in der Nut als Klebstoffreservoir sich befindende Klebstoff verteilt wird im Spaltbereich zwischen Welle und Nabe. Die Nuten vermindern im Übrigen das Trägheitsmoment der Nabe und verbessert somit die Dynamik eines Motors, der einen Rotor aufweist, welcher gebildet ist aus Welle und Nabe.

Bei einer vorteilhaften Ausgestaltung wird beim dritten Schritt ein Verdrehwinkel von zunächst 180° / N ausgeführt in einer Drehrichtung und danach ein Verdrehwinkel von 360° / N, wobei N die Anzahl der Nuten am Umfang der Nabe ist. Von Vorteil ist dabei, dass eine weiter verbesserte Klebstoffverteilung erreichbar ist.

Bei einer vorteilhaften Ausgestaltung wird für die Welle-Nabe-Verbindung je Nut insgesamt eine Klebstoffmenge eingebracht, die größer ist als y*2*π*R*s*L/N,
wobei
y ein Sicherheitsfaktor ist, der zwischen 1,1 und 1,5 beträgt,
R der Radius der Aufnahmeausnehmung in der Nabe ist,
s die Spaltbreite,
L die Länge des stoffschlüssigen Verbindungsbereichs in axialer Richtung,
N die Anzahl der Nuten in Umfangsrichtung. Von Vorteil ist dabei, dass der Nutquerschnitt entsprechend abstimmbar ist auf die einzubringende Klebstoffmenge.

Bei einer vorteilhaften Ausgestaltung wird der jeweilige Nutquerschnitt derart gewählt, dass seine Fläche größer ist als 2*π*R*s/N,
wobei
R der Radius der Aufnahmeausnehmung in der Nabe ist, s die Spaltbreite und N die Anzahl der Nuten in Umfangsrichtung. Von Vorteil ist dabei, dass der Nutquerschnitt in Abhängigkeit von der Spielpassung, also der Spaltbreite, und den weiteren genannten Größen wählbar ist.

Bei einer vorteilhaften Ausgestaltung wird der jeweilige Nutquerschnitt derart gewählt, dass er einen Kreisbogenabschnitt als Nutwandung aufweist, insbesondere als Kreisbogenabschnitt ausgeführt ist, und zur die Ausnehmung begrenzenden Innenwand zur Aufnahme der Welle mit einem flachen Winkel, der zwischen 10° und 40° liegt, insbesondere kleiner als 30° ist, in die die Ausnehmung begrenzende Innenwand mündet,

insbesondere wobei die Kante im Übergangsbereich zwischen der die Ausnehmung begrenzenden Innenwand und der Nutwandung entgratet und/oder mit einem Übergangsradius ausgeführt ist. Von Vorteil ist dabei, dass somit das Einziehen des eine optimierte Viskosität aufweisenden Klebstoffes aus der Nut in den Spalt zwischen Welle und Nabe effektiv ausführbar ist.

Bei einer vorteilhaften Ausgestaltung weist die Nabe vor dem Einführen der Welle eine höhere Temperatur als die Welle auf, insbesondere eine mindestens 60°C oder mindestens 100 °C höhere Temperatur. Von Vorteil ist dabei, dass ein besonders einfaches Einfädeln und Einführen der Welle in die Ausnehmung der Nabe ausführbar ist und der Klebstoff beschleunigt aushärtet.

Bei einer vorteilhaften Ausgestaltung ist die Nabe ein aus in axialer Richtung gestapelt angeordneten Einzelblechen zusammengesetzt ist. Von Vorteil ist dabei, dass ein Blechpaket auf eine Welle klebeverbindbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
Bei einer erfindungsgemäßen Welle-Nabe-Verbindung wird eine stoffschlüssige Verbindung hergestellt, indem die Nabe auf die Welle aufgeschoben wird.

Vorzugsweise ist die Nabe ein Blechpaket, das eine zylindrisch geformte, mittig angeordnete Ausnehmung aufweist, in welche die Welle mit einem zylindrischen Wellenabschnitt eingeschoben wird.

Das Blechpaket 3 ist aus Einzelblechen gestapelt ausgeführt.

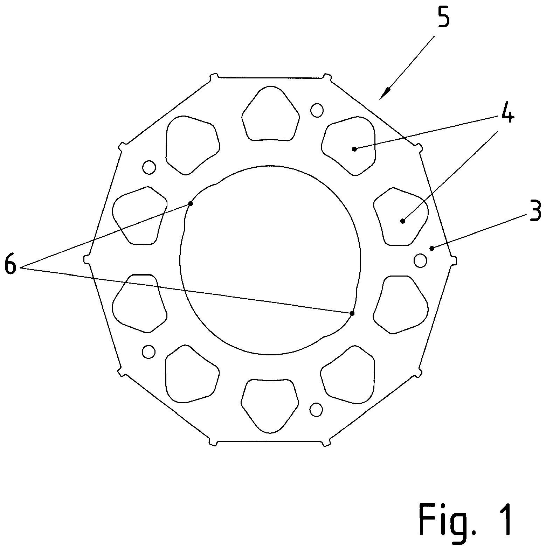

In Figur 1 ist eine Draufsicht auf ein Einzelblech gezeigt.

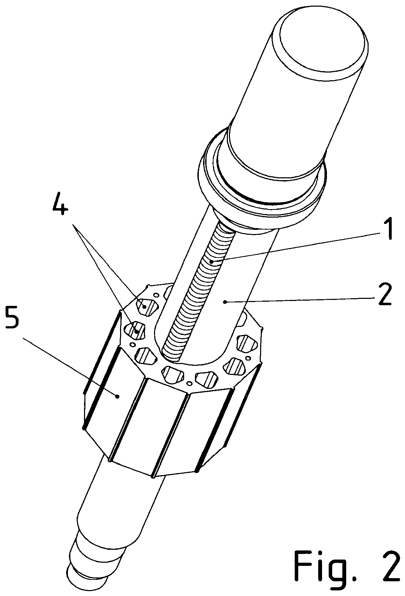

In Figur 2 ist ein vergrößerter Ausschnitt eines Querschnitts durch die Nabe gezeigt, wobei die Querschnittsebene die Motorwellenachse enthält. Der Ausschnitt betrifft die die Aufnahmeausnehmung begrenzende Innenwandung der Nabe, wobei die Endbereiche der Einzelbleche 3 gezeigt sind. Somit sind die zwischen den Einzelblechen gebildeten Mikrozwischenräume sichtbar.

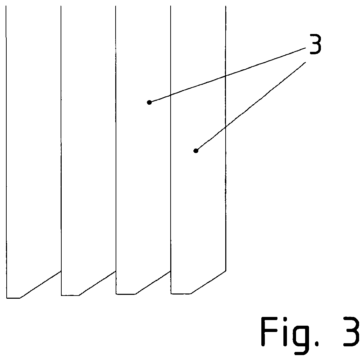

Figur 3 zeigt die Welle 2 vor dem Einführen in die Nabe, wobei sie eine axial sich erstreckende Klebstoffspur aufweist, welche auch als Klebstoffraupe bezeichnet wird.

Beim Fügen wird die Nabe in einer derartigen zur Welle 2 relativen Winkelstellung auf die Welle 2 aufgeschoben, dass die Nuten 6 im Winkelbereich der Klebstoffraupe 1 liegen. Somit wird die Nutöffnung optimal mit Klebstoff beim Aufschieben der Nabe auf die Welle 2 versorgt und die Nuten werden als Klebstoffreservoir befüllt mit Klebstoff.

Nach diesem axialen Aufschieben der Nabe auf die Welle 2 wird die Welle 2 relativ zur Nabe in Umfangsrichtung gedreht. Dabei wird der Klebstoff aus dem Klebstoffreservoir im Spaltbereich zwischen Nabe und Welle 2 verteilt. Insbesondere verteilt sich dabei der Klebstoff auch in die Mikrozwischenräume zwischen den Einzelblechen 3 der Nabe. Somit ist eine optimale Klebeverbindung bewirkt.

Der Spaltbereich zwischen Nabe und Welle 2 ist im Wesentlichen bestimmt dadurch, dass der Außendurchmesser der Welle im zur Verbindung mit der Nabe vorgesehenen Wellenabschnitt kleiner ist als der Innendurchmesser der Nabe im Verbindungsabschnitt.

Vorzugsweise sind die Nuten 6 halbkreisförmig ausgeführt.

Zur Magnetfeldführung weisen die Einzelbleche 3 Ausnehmungen 4 auf. Zur Herstellung eines Rotors eines Synchronmotors werden am Außenumfang auf den Klebeflächen 5 ebene Fläche zum Aufkleben der Dauermagnete ausgeführt.

Der Klebstoff ist ein anaerob härtender Klebstoff.

In Umfangsrichtung sind zwei oder mehr Nutbereiche an der Nabe angeordnet, die regelmäßig voneinander beabstandet sind. Bei N Nuten beträgt also der Winkelabstand 360° / N.

Die Drehung in Umfangsrichtung wird bei einer ersten Ausführungsform in einer Drehrichtung mit dem Winkel von etwa 360° / N ausgeführt. Alternativ ist aber auch einen Drehung in einer ersten Drehrichtung um 180° / N und nachfolgender Rückwärtsdrehung um 360° / N ausführbar. Somit erfolgt die Drehung im Bereich ±180° / N um die beim Fügen vorliegende Winkelstellung herum. Auf diese Weise lässt sich ein Abreißen des Klebstofffilms noch besser verhindern und somit eine Verteilung des Klebstoffes über noch größere Flächen erreichen.

Bei weiteren erfindungsgemäßen Ausführungsbeispielen wird durch thermisches Aufschrumpfen das Fügen vereinfacht und die Klebeverbindung verbessert. Hierbei wird die Nabe vor dem Fügen auf eine erste Temperatur erwärmt, die beispielsweise zwischen 100° C und 150°C liegt. Danach wird die Nabe auf die nicht vorgewärmte, insbesondere abgekühlte, Welle aufgeschoben, wobei wiederum die Winkelstellung der Nabe derart gewählt ist, dass die Nut in Umfangsrichtung im Winkelbereich der Klebstoffraupe 1 angeordnet ist.

Somit wird wiederum die Nut mit Klebstoff gut ausgefüllt. Nach dem Aufschieben und Verdrehen kühlt sich die Nabe ab und der Innendurchmesser der Aufnahmeausnehmung der Nabe verringert sich, wodurch auch der Spaltbereich auf den vorgesehenen Wert sinkt, beispielsweise zwischen 10 µm und 200 µm. Während der Abkühlung wird die genannte relative Drehbewegung ausgeführt. Durch die beim Abkühlen anfangs noch erhöhte Temperatur wird auch das Aushärten des Klebstoffs beschleunigt.

Vor dem Fügen hat die Welle 2 dabei eine Temperatur von vorzugsweise weniger als 20°C oder sogar weniger als 0°C. Somit ist der Spaltbereich vor dem Fügen sehr groß vorgesehen.

Bei weiteren erfindungsgemäßen Ausführungsbeispielen wird statt der vor dem Fügen aufgebrachten Klebstoffraupe 1 der Klebstoff während des Aufschiebens mittels Röhrchen an den Bereich der Nutöffnung herangeführt und kontinuierlich in diesen Bereich eingespritzt. Somit ist ein vorheriges Aufbringen auf die Welle 2 als Klebstoffraupe 1 verzichtbar.

Bei weiteren erfindungsgemäßen Ausführungsbeispielen wird zusätzlich zu den jeder Nut zugeordneten Klebstoffraupen 1 auf der Welle 2, wie in den vorgenannten Ausführungsbeispielen, noch Klebstoff an der Innenwandung der Aufnahmeausnehmung der Nabe vorgesehen vor dem Fügen der Welle 2 in die Nabe. Somit ist eine verbesserte Verfüllung der Mikroräume im Blechpaket der Nabe erreichbar.

Bei weiteren erfindungsgemäßen Ausführungsbeispielen wird insgesamt eine Klebstoffmenge eingebracht, die größer ist als y*2*π*R*s*L / N,
wobei
y ein Sicherheitsfaktor ist, der vorzugsweise 1,2 oder mehr beträgt,
R der Radius der Aufnahmeausnehmung in der Nabe ist,
s die Spaltbreite,
L die Länge des stoffschlüssigen Verbindungsbereichs in axialer Richtung,
N die Anzahl der Nuten in Umfangsrichtung.

Die Spaltbreite liegt bevorzugt im Bereich zwischen 10 und 200 µm.

Der Nutquerschnitt wird also derart gewählt, dass seine Fläche größer ist als y*2*π*R*s / N.

Vorzugsweise wird der Nutquerschnitt derart gewählt, dass er einen Kreisbogenabschnitt als Nutwandung aufweist und in die Aufnahmeausnehmung mit einem flachen Winkel, der zwischen 10 und 40° liegt, insbesondere kleiner als 30° ist, in die Aufnahmeausnehmung mündet. Auf diese Weise wird der Klebstoff bei der Drehbewegung besser verteilt, da er ohne abzureißen in den Klebespaltbereich zwischen Welle 2 und Nabe eingezogen wird. Die Kante am Nutrand, also im Übergangsbereich zur Aufnahmeausnehmung wird vorzugsweise entgratet und/oder mit einem Übergangsradius ausgeführt.

Bei weiteren erfindungsgemäßen Ausführungsbeispielen werden an der Aufnahmeausnehmung Aktivatoren, Haftvermittler, und/oder Primer aufgebracht, bevor der Klebstoff zugeführt wird.

### Bezugszeichenliste

1 Klebstoffraupe, insbesondere Klebstoffspur
2 Welle, insbesondere Motorwelle
3 Einzelblech des Blechpakets
4 Ausnehmungen
5 Klebefläche für Dauermagnete
6 Nut, insbesondere kreisabschnittsförmige Nut

## Patentansprüche

1. Welle-Nabe-Verbindung,
wobei eine Welle (2) mit einem Wellenabschnitt in einer Ausnehmung (4) eines Aufnahmeteils, insbesondere Nabe, aufgenommen ist,
wobei der Wellenabschnitt eine zylindrische Oberfläche aufweist,
wobei die Ausnehmung (4) im Wesentlichen zylindrisch geformt ist,
wobei in der Nabe axial sich erstreckende Nuten (6) angeordnet sind, welche in Umfangsrichtung voneinander regelmäßig beabstandet sind,
wobei zwischen der Nabe und dem Wellenabschnitt Klebstoff angeordnet ist,
wobei das Aufnahmeteil als Stapel von Einzelblechteilen ausgeführt ist, wobei jedes Einzelblechteil eine mittig angeordnete zylindrische Ausnehmung (4) aufweist,
wobei in Umfangsrichtung gleichmäßig voneinander beabstandete Nuten (6) am Aufnahmeteil angeordnet sind, wobei die Nuten (6) die Ausnehmung (4) vergrößern,
wobei zwischen Aufnahmeteil und Welle (2) Klebstoff angeordnet ist, **dadurch gekennzeichnet, dass** am äußeren Umfang des Aufnahmeteils Dauermagnete stoffschlüssig verbunden sind, also klebeverbunden sind, mit dem Aufnahmeteil,
wobei der Klebstoff sich auch in sich in radialer Richtung erstreckende Mikroräume zwischen den Einzelblechen (3) erstreckt,
wobei die Einzelbleche derart in axialer Richtung hintereinander gestapelt angeordnet sind, dass die aus den Nuten (6) der Einzelbleche gebildeten Nuten (6) im Aufnahmeteil jeweils in axialer Richtung mit einem Schrägungswinkel sich erstrecken, also schraubenabschnittsförmig beziehungsweise spiralabschnittsförmig verlaufen.

2. Welle-Nabe-Verbindung nach Anspruch 1,
**dadurch gekennzeichnet, dass**
der Wellenabschnitt zylindrisch ist und die Ausnehmung (4) ebenfalls zylindrisch ist.

3. Verfahren zum Herstellen einer Welle-Nabe-Verbindung, insbesondere nach mindestens einem der vorangegangenen Ansprüche,
wobei ein Aufnahmeteil, insbesondere Nabe, eine mittig angeordnete Ausnehmung (4), insbesondere zylindrische Ausnehmung (4), zur Aufnahme einer Welle (2) vorgesehen ist,
wobei das Aufnahmeteil zumindest eine sich in axialer Richtung erstreckende Nut (6), insbesondere zwei oder mehr in Umfangsrichtung voneinander gleichmäßig beabstandete Nuten (6), an seiner die Ausnehmung (4) begrenzenden Innenwand aufweist,
wobei am äußeren Umfang des Aufnahmeteils Dauermagnete stoffschlüssig verbunden sind, also klebeverbunden sind, mit dem Aufnahmeteil,
wobei das Aufnahmeteil als Stapel von Einzelblechteilen ausgeführt ist, wobei jedes Einzelblechteil eine mittig angeordnete zylindrische Ausnehmung (4) aufweist,
wobei die Einzelbleche derart in axialer Richtung hintereinander gestapelt angeordnet sind, dass die aus den Nuten (6) der Einzelbleche gebildeten Nuten (6) im Aufnahmeteil jeweils in axialer Richtung mit einem Schrägungswinkel sich erstrecken, also schraubenabschnittsförmig beziehungsweise spiralabschnittsförmig verlaufen,
wobei der jeweilige Nutquerschnitt derart gewählt wird, dass seine Fläche größer ist als 2*π*R*s/N,
wobei
R der Radius der Aufnahmeausnehmung in der Nabe ist,
s die Spaltbreite,
L die Länge des stoffschlüssigen Verbindungsbereichs in axialer Richtung,
N die Anzahl der Nuten (6) in Umfangsrichtung
wobei in einem ersten Schritt Klebstoff auf die Welle (2) aufgebracht wird, wobei zumindest eine in axialer Richtung verlaufende Klebstoffspur gebildet wird,
in einem zweiten Schritt die Welle (2) in das Aufnahmeteil eingeführt wird, wobei die relative Winkellage zwischen Welle (2) und Nabe derart gewählt ist, dass eine jeweilige Nut (6) über die Klebstoffspur geschoben wird,
wobei in einem dritten Schritt die Welle (2) relativ zur Nabe gedreht wird
- wobei beim dritten Schritt ein Verdrehwinkel von 360°/N ausgeführt wird, wobei N die Anzahl der Nuten (6) am Umfang der Nabe ist,
und/oder wobei
- beim dritten Schritt ein Verdrehwinkel von zunächst 180°/N ausgeführt wird in einer Drehrichtung und danach ein Verdrehwinkel von 360°/N, wobei N die Anzahl der Nuten (6) am Umfang der Nabe ist.

4. Verfahren zum Herstellen einer Welle-Nabe-Verbindung, insbesondere nach mindestens einem der vorangegangenen Ansprüche,
wobei ein Aufnahmeteil, insbesondere Nabe, eine mittig angeordnete Ausnehmung (4), insbesondere zylindrische Ausnehmung (4), zur Aufnahme einer Welle (2) vorgesehen ist,
wobei das Aufnahmeteil zumindest eine sich in axialer Richtung erstreckende Nut (6), insbesondere zwei oder mehr in Umfangsrichtung voneinander gleichmäßig beabstandete Nuten (6), an seiner die Ausnehmung (4) begrenzenden Innenwand aufweist,
**dadurch gekennzeichnet, dass**
in einem ersten Schritt mit einem Röhrchen als Mittel zur Klebstoffzuführung derart relativ zur Nabe angeordnet wird, dass Klebstoff in eine beziehungsweise mehrere Nutöffnungen einpressbar ist,
in einem zweiten Schritt die Welle (2) in das Aufnahmeteil eingeführt wird, wobei gleichzeitig **mit dem Röhrchen** Klebstoff in die Nutöffnung beziehungsweise Nutöffnungen eingespritzt wird,
wobei in einem dritten Schritt die Welle (2) relativ zur Nabe gedreht wird,
wobei beim dritten Schritt ein Verdrehwinkel von 360°/N ausgeführt wird, wobei N die Anzahl der Nuten (6) am Umfang der Nabe ist,
und/oder wobei
beim dritten Schritt ein Verdrehwinkel von zunächst 180°/N ausgeführt wird in einer Drehrichtung und danach ein Verdrehwinkel von 360°/N, wobei N die Anzahl der Nuten (6) am Umfang der Nabe ist,
wobei der jeweilige Nutquerschnitt derart gewählt wird, dass seine Fläche größer ist als 2*π*R*s/N,
wobei
R der Radius der Aufnahmeausnehmung in der Nabe ist,
s die Spaltbreite,
L die Länge des stoffschlüssigen Verbindungsbereichs in axialer Richtung,
N die Anzahl der Nuten (6) in Umfangsrichtung.

5. Verfahren nach mindestens einem der vorangegangenen Ansprüche,
**dadurch gekennzeichnet, dass**
für die Welle-Nabe-Verbindung insgesamt eine Klebstoffmenge je Nut (6) eingebracht wird, die größer ist als y*2*π*R*s*L/ N, wobei
y ein Sicherheitsfaktor ist, der zwischen 1,1 und 1,5 beträgt,
R der Radius der Aufnahmeausnehmung in der Nabe ist,
s die Spaltbreite,
L die Länge des stoffschlüssigen Verbindungsbereichs in axialer Richtung,
N die Anzahl der Nuten (6) in Umfangsrichtung.

6. Verfahren nach mindestens einem der vorangegangenen Ansprüche,
**dadurch gekennzeichnet, dass**
der jeweilige Nutquerschnitt derart gewählt wird, dass er einen Kreisbogenabschnitt als Nutwandung aufweist, insbesondere als Kreisbogenabschnitt ausgeführt ist, und zur die Ausnehmung (4) begrenzenden Innenwand zur Aufnahme der Welle (2) mit einem flachen Winkel, der zwischen 10° und 40° liegt, insbesondere kleiner als 30° ist, in die die Ausnehmung (4) begrenzende Innenwand mündet,
insbesondere wobei die Kante im Übergangsbereich zwischen der die Ausnehmung (4) begrenzenden Innenwand und der Nutwandung entgratet und/oder mit einem Übergangsradius ausgeführt ist.

7. Verfahren nach mindestens einem der vorangegangenen Ansprüche,
**dadurch gekennzeichnet, dass**
vor dem zweiten Schritt an der die Ausnehmung (4) in der Nabe begrenzenden Innenwand Klebstoff aufgebracht wird.

8. Verfahren nach mindestens einem der vorangegangenen Ansprüche,
**dadurch gekennzeichnet, dass**
die Nabe vor dem Einführen der Welle (2) eine höhere Temperatur als die Welle (2) aufweist, insbesondere eine mindestens 60°C oder mindestens 100 °C höhere Temperatur.

9. Verfahren nach mindestens einem der vorangegangenen Ansprüche,
**dadurch gekennzeichnet, dass**
die Nabe ein aus in axialer Richtung gestapelt angeordneten Einzelblechen (3) zusammengesetzt ist.

## Claims

1. Shaft-hub connection,
wherein a shaft (2) is received with a shaft portion in a cutout (4) of a receiving part, in particular hub,
wherein the shaft portion has a cylindrical surface,
wherein the cutout (4) is of substantially cylindrical shape, wherein axially extending grooves (6) are arranged in the hub, which are regularly spaced from one another in the circumferential direction,
wherein adhesive is arranged between the hub and the shaft portion,
wherein the receiving part is designed as a stack of individual laminations, wherein each individual lamination has a centrally arranged cylindrical cutout (4),
wherein grooves (6) are arranged spaced apart evenly from one another in the circumferential direction on the receiving part, wherein the grooves (6) enlarge the cutout,
wherein adhesive is arranged between receiving part and shaft (2),
**characterised in that**
permanent magnets are connected in a material-locking manner, i.e. adhesively connected, to the receiving part on the outer circumference of the receiving part,
wherein the adhesive extends also into micro-spaces, extending in the radial direction, between the individual laminations (3),
wherein the individual laminations are arranged stacked one behind the other in the axial direction such that the grooves (6) in the receiving part which are formed from the grooves (6) of the individual laminations each extend in the axial direction with a helix angle, i.e. a helical-portion-shaped or spiral-portion-shaped course.

2. Shaft-hub connection according to Claim 1,
**characterised in that**
the shaft portion is cylindrical and the cutout (4) is likewise cylindrical.

3. Method for establishing a shaft-hub connection, in particular according to at least one of the preceding claims,
wherein a receiving part, in particular hub, a centrally arranged cutout (4), in particular cylindrical cutout (4), for receiving a shaft (2), is provided,
wherein the receiving part has at least one groove (6) extending in the axial direction, in particular two or more grooves (6) spaced evenly from one another in the circumferential direction, on its inner wall bounding the cutout (4),
wherein permanent magnets are connected in a material-locking manner, i.e. adhesively connected, to the receiving part on the outer circumference of the receiving part,
wherein the receiving part is designed as a stack of individual laminations, wherein each individual lamination has a centrally arranged cylindrical cutout (4),
wherein the individual laminations are arranged stacked one behind the other in the axial direction such that the grooves (6) in the receiving part which are formed from the grooves (6) of the individual laminations each extend in the axial direction with a helix angle, i.e. a helical-portion-shaped or spiral-portion-shaped course,
wherein the respective groove cross-section is selected such that its area is greater than 2*π*R*s/N,
where
R is the radius of the receiving cutout in the hub,
s is the gap width,
L is the length of the material-locking connecting region in the axial direction,
N is the number of grooves (6) in the circumferential direction,
wherein in a first step adhesive is applied to the shaft (2), wherein at least one adhesive track running in the axial direction is formed,
in a second step the shaft (2) is inserted into the receiving part, wherein the relative angular position between the shaft (2) and the hub is selected such that a respective groove (6) is slipped over the adhesive track,
wherein in a third step the shaft (2) is rotated relative to the hub
- wherein in the third step a rotation angle of 360°/N is performed, where N is the number of grooves (6) on the circumference of the hub,
and/or wherein
- in the third step a rotation angle of 180°/N is initially performed in one direction of rotation and then a rotation angle of 360°/N, where N is the number of grooves (6) on the circumference of the hub.

4. Method for establishing a shaft-hub connection, in particular according to at least one of the preceding claims,
wherein a receiving part, in particular hub, a centrally arranged cutout (4), in particular cylindrical cutout (4), for receiving a shaft (2), is provided,
wherein the receiving part has at least one groove (6) extending in the axial direction, in particular two or more grooves (6) spaced evenly from one another in the circumferential direction, on its inner wall bounding the cutout (4),
**characterised in that**
in a first step with a tube as means for adhesive supply is arranged relative to the hub in such a way that adhesive can be pressed into one or more groove openings,
in a second step the shaft (2) is inserted into the receiving part, wherein simultaneously adhesive is injected into the groove opening or groove openings by the tube,
wherein in a third step the shaft (2) is rotated relative to the hub,
wherein in the third step a rotation angle of 360°/N is performed, where N is the number of grooves (6) on the circumference of the hub,
and/or wherein
in the third step a rotation angle of 180°/N is initially performed in one direction of rotation and then a rotation angle of 360°/N, where N is the number of grooves (6) on the circumference of the hub,
wherein the respective groove cross-section is selected such that its area is greater than 2*π*R*s/N,
where
R is the radius of the receiving cutout in the hub,
s is the gap width,
L is the length of the material-locking connecting region in the axial direction,
N is the number of grooves (6) in the circumferential direction.

5. Method according to at least one of the preceding claims,
**characterised in that**
for the shaft-hub connection there is introduced for each groove (6) a total amount of adhesive which is greater than y*2*π*R*s*L/N,
where
y is a safety factor which is between 1.1 and 1.5,
R is the radius of the receiving cutout in the hub,
s is the gap width,
L is the length of the material-locking connecting region in the axial direction,
N is the number of grooves (6) in the circumferential direction.

6. Method according to at least one of the preceding claims,
**characterised in that**
the respective groove cross-section is selected such that it has a circular-arc portion as groove wall, in particular is designed as a circular-arc portion, and with respect to the inner wall, bounding the cutout (4), for receiving the shaft (2), opens into the inner wall bounding the cutout (4) with a flat angle which lies between 10° and 40°, in particular is less than 30°,
in particular wherein the edge in the transition region between the inner wall, bounding the cutout (4), and the groove wall is deburred and/or designed with a transition radius.

7. Method according to at least one of the preceding claims,
**characterised in that**
before the second step, adhesive is applied to the inner wall bounding the cutout (4) in the hub.

8. Method according to at least one of the preceding claims,
**characterised in that**
the hub has a higher temperature than the shaft (2) before the insertion of the shaft (2), in particular an at least 60°C or at least 100°C higher temperature.

9. Method according to at least one of the preceding claims,
**characterised in that**
the hub is composed of individual laminations (3) arranged stacked in the axial direction.

## Revendications

1. Liaison arbre-moyeu, dans laquelle
un arbre (2) est logé, par un segment, dans un évidement (4) d'une partie réceptrice, en particulier d'un moyeu,
ledit segment de l'arbre présente une surface cylindrique,
ledit évidement (4) revêt une forme pour l'essentiel cylindrique,
des rainures (6) s'étendant axialement, pratiquées dans ledit moyeu, sont mutuellement espacées d'intervalles réguliers dans le sens périphérique,
un adhésif est interposé entre ledit moyeu et ledit segment de l'arbre,
ladite partie réceptrice est réalisée sous la forme d'un empilement de pièces individuelles en tôle, chaque pièce individuelle en tôle comportant un évidement cylindrique (4) occupant une position centrale,
des rainures (6), mutuellement espacées d'intervalles réguliers dans le sens périphérique, sont pratiquées dans ladite partie réceptrice, lesdites rainures (6) accroissant la taille dudit évidement (4),
un adhésif est interposé entre ladite partie réceptrice et ledit arbre (2),
**caractérisée par le fait que**
des aimants permanents sont reliés matériellement sur le pourtour extérieur de la partie réceptrice, c'est-à-dire reliés à ladite partie réceptrice par collage,
l'adhésif pénétrant également dans des micro-interstices qui s'étendent dans la direction radiale entre les tôles individuelles (3),
lesdites tôles individuelles étant agencées avec empilement en succession, dans la direction axiale, de façon telle que les rainures (6), pratiquées dans ladite partie réceptrice et formées par les rainures (6) desdites tôles individuelles, s'étendent à chaque fois en décrivant un angle d'inclinaison dans la direction axiale, c'est-à-dire avec un tracé respectivement en forme de tronçons hélicoïdaux, ou de tronçons spiroïdaux.

2. Liaison arbre-moyeu selon la revendication 1,
**caractérisée par le fait que**
le segment de l'arbre est cylindrique, l'évidement (4) étant pareillement cylindrique.

3. Procédé d'instauration d'une liaison arbre-moyeu notamment conforme à au moins l'une des revendications précédentes, dans lequel
une partie réceptrice, en particulier un moyeu, comporte un évidement (4) occupant une position centrale, notamment un évidement cylindrique (4) conçu pour recevoir un arbre (2),
ladite partie réceptrice présente, dans sa paroi intérieure délimitant ledit évidement (4), au moins une rainure (6) s'étendant dans la direction axiale, en particulier des rainures (6) au nombre de deux ou plus, qui sont mutuellement espacées d'intervalles réguliers dans le sens périphérique,
des aimants permanents sont reliés matériellement sur le pourtour extérieur de la partie réceptrice, c'est-à-dire reliés à ladite partie réceptrice par collage,
ladite partie réceptrice est réalisée sous la forme d'un empilement de pièces individuelles en tôle, chaque pièce individuelle en tôle comportant un évidement cylindrique (4) occupant une position centrale,
les tôles individuelles étant agencées avec empilement en succession, dans la direction axiale, de façon telle que les rainures (6), pratiquées dans ladite partie réceptrice et formées par les rainures (6) desdites tôles individuelles, s'étendent à chaque fois en décrivant un angle d'inclinaison dans la direction axiale, c'est-à-dire avec un tracé respectivement en forme de tronçons hélicoïdaux, ou de tronçons spiroïdaux,
la section transversale respective desdites rainures est choisie de telle sorte que son aire soit supérieure à 2*n*R*s/ N, auquel cas
R est le rayon de l'évidement récepteur pratiqué dans le moyeu,
s est la largeur des interstices,
L est la longueur de la zone de liaison matérielle dans la direction axiale,
N est le nombre des rainures (6) dans le sens périphérique, sachant
que, lors d'une première étape, un adhésif est déposé sur l'arbre (2), donnant naissance à au moins un cordon d'adhésif qui s'étend dans la direction axiale,
que, lors d'une deuxième étape, ledit arbre (2) est inséré dans la partie réceptrice, la position angulaire relative, entre ledit arbre (2) et le moyeu, étant choisie de façon telle qu'une rainure (6) respective soit engagée au-dessus dudit cordon d'adhésif,
que, lors d'une troisième étape, ledit arbre (2) est animé d'une rotation par rapport audit moyeu, étant précisé que,
- durant la troisième étape, il s'opère une torsion d'un angle de 360° / N, N étant le nombre des rainures (6) pratiquées dans le pourtour du moyeu,
et/ou que,
- durant ladite troisième étape, il s'opère tout d'abord une torsion d'un angle de 180° / N dans une direction de rotation, puis une torsion d'un angle de 360° / N, N étant le nombre des rainures (6) pratiquées dans le pourtour dudit moyeu.

4. Procédé d'instauration d'une liaison arbre-moyeu notamment conforme à au moins l'une des revendications précédentes, dans lequel
une partie réceptrice, en particulier un moyeu, comporte un évidement (4) occupant une position centrale, notamment un évidement cylindrique (4) conçu pour recevoir un arbre (2),
ladite partie réceptrice présente, dans sa paroi intérieure délimitant ledit évidement (4), au moins une rainure (6) s'étendant dans la direction axiale, en particulier des rainures (6) au nombre de deux ou plus, qui sont mutuellement espacées d'intervalles réguliers dans le sens périphérique,
**caractérisé par le fait que**,
lors d'une première étape, un petit tube remplissant la fonction d'un moyen de délivrance d'adhésif est placé, par rapport au moyeu, de telle sorte que de l'adhésif puisse être respectivement introduit, sous pression, dans une ou plusieurs ouverture(s) de rainure(s), que, lors d'une deuxième étape, l'arbre (2) est inséré dans la partie réceptrice, de l'adhésif étant alors respectivement injecté de manière simultanée, à l'aide dudit petit tube, dans l'ouverture ou les ouvertures de rainure(s),
que, lors d'une troisième étape, ledit arbre (2) est animé d'une rotation par rapport audit moyeu, étant précisé que,
durant la troisième étape, il s'opère une torsion d'un angle de 360° / N, N étant le nombre des rainures (6) pratiquées dans le pourtour du moyeu,
et/ou que,
durant ladite troisième étape, il s'opère tout d'abord une torsion d'un angle de 180° / N dans une direction de rotation, puis une torsion d'un angle de 360° / N, N étant le nombre des rainures (6) pratiquées dans le pourtour dudit moyeu,
la section transversale respective desdites rainures étant choisie de telle sorte que son aire soit supérieure à 2*n*R*s/ N,
auquel cas
R est le rayon de l'évidement récepteur pratiqué dans le moyeu,
s est la largeur des interstices,
L est la longueur de la zone de liaison matérielle dans la direction axiale,
N est le nombre des rainures (6) dans le sens périphérique.

5. Procédé selon au moins l'une des revendications précédentes,
**caractérisé par le fait que**,
pour assurer la liaison arbre-moyeu, une quantité totale d'adhésif supérieure à y*2*π*R*s*L / N est déversée dans chaque rainure (6),
auquel cas
y est un facteur de sécurité mesurant entre 1,1 et 1,5,
R est le rayon de l'évidement récepteur pratiqué dans le moyeu,
s est la largeur des interstices,
L est la longueur de la zone de liaison matérielle dans la direction axiale,
N est le nombre des rainures (6) dans le sens périphérique.

6. Procédé selon au moins l'une des revendications précédentes,
**caractérisé par le fait que**
la section transversale respective des rainures est choisie de façon telle qu'elle présente une région en arc de cercle, en tant que paroi desdites rainures, en étant notamment réalisée sous la forme d'une région en arc de cercle ; et que, par rapport à la paroi intérieure délimitant l'évidement (4) en vue de recevoir l'arbre (2), elle débouche, dans ladite paroi intérieure délimitant ledit évidement (4), en décrivant un angle plan compris entre 10° et 40, notamment inférieur à 30°,
sachant notamment que l'arête, située dans la zone de transition entre ladite paroi des rainures et ladite paroi intérieure délimitant ledit évidement (4), est ébarbée et/ou munie d'un rayon de transition.

7. Procédé selon au moins l'une des revendications précédentes,
**caractérisé par le fait que**
de l'adhésif est déposé, préalablement à la deuxième étape, sur la paroi intérieure délimitant l'évidement (4) pratiqué dans le moyeu.

8. Procédé selon au moins l'une des revendications précédentes,
**caractérisé par le fait que**
le moyeu présente, avant l'insertion de l'arbre (2), une température supérieure à celle dudit arbre (2), notamment une température supérieure d'au moins 60° C ou supérieure d'au moins 100° C.

9. Procédé selon au moins l'une des revendications précédentes,
**caractérisé par le fait que**
le moyeu est composé de tôles individuelles (3) agencées avec empilement dans la direction axiale.
